# EUROPEAN PATENT SPECIFICATION

(11) **EP 2 179 218 B1**
(45) Date of publication and mention of the grant of the patent: **26.10.2016**
(21) Application number: 08826828.9
(22) Date of filing: 17.07.2008
(51) Int. Cl.: F23M 5/08, F23C 10/10, F28D 13/00, F28D 21/00, F22B 31/00

(54) **INTEGRAL WATERWALL EXTERNAL HEAT EXCHANGERS**
EXTERNE WÄRMETAUSCHER FÜR EINE INTEGRALWASSERWAND
ÉCHANGEURS THERMIQUES EXTERNES À PAROI D'EAU EN UN SEUL BLOC

(30) Priority: 31.07.2007 US 831001
(43) Date of publication of application: 28.04.2010
(73) Proprietor: General Electric Technology GmbH, 5400 Baden (CH)
(72) Inventor: PANOS, Paul J., Windsor, Connecticut 06095 (US); BANAS, John M., Warren, Massachusetts 01083 (US)
(74) Representative: General Electric Technology GmbH
(86) International application number: PCT/US2008/070269
(87) International publication number: WO 2009/017972

(56) References cited:
- EP-A- 0 033 713
- EP-A- 0 298 671
- EP-A- 0 898 115
- WO-A-01/35020
- US-A- 4 084 545
- US-A- 4 716 856
- US-A- 5 442 919

## Description

### BACKGROUND OF THE INVENTION

### 1. Field of the Invention

The invention disclosed herein relates to a combustion system and, in particular, to an integral boiler waterwall external heat exchanger in a fluid bed boiler.

### 2. Description of the Related Art

Consider a combustion system that makes use of an external heat exchanger.

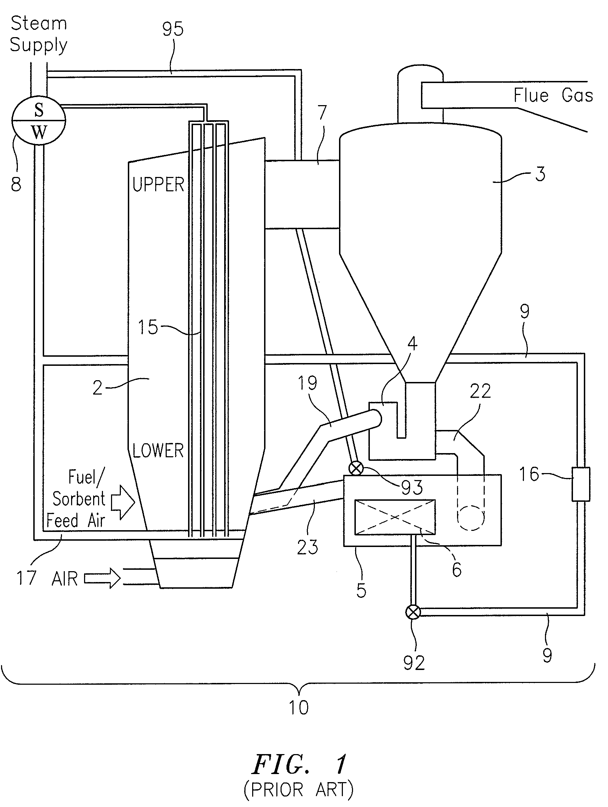

Referring to FIG. 1, there are shown aspects of an embodiment of a prior art circulating fluidized bed steam generator (CFBSG) 10. In this embodiment, the CFBSG 10 includes a combustor 2, at least one cyclone 3, a respective seal pot 4, a respective external heat exchanger (EHE) 5, and various other components. For purposes of illustration, it is considered that the exemplary embodiment makes use of only one cyclone 3. However, it applies to any number of cyclones.

In operation, crushed fuel (e.g., coal) and sorbent (e.g., limestone) are fed to a lower portion of the combustor 2. Primary air is supplied to a bottom portion of the combustor 2 through an air distributor, with secondary air fed through one or more elevations of air ports in a lower portion of the combustor 2.

Combustion takes place throughout the combustor 2, which contains circulating bed material. Flue gas and entrained solids leave the combustor 2 as combustor exhaust and enter one or more cyclone units (simply referred to as the "cyclone" 3). In the cyclone 3, solids are separated from the flue gas and fall to a seal pot 4. From the seal pot 4, the solids are recycled to the combustor 2 via an ash return 19. In this embodiment, some of the solids are diverted to the external heat exchanger (EHE) 5 and then to the combustor 2 via an EHE outlet duct 23. In the EHE 5, one or more tube bundles absorb heat from the fluidized solids to cool the fluidized solids and to convert part of the water flowing through the tube bundles into steam, which is supplied to a user, such as a turbine for power generation. Solids travel between the EHE 5 and the seal pot 4 by an EHE inlet duct 22.

In some lighter duty circulating fluidized bed steam generator (CFBSG) 10, the EHE 5 is not warranted. However, in certain other embodiments, such as those taking advantage of certain reheat cycles, fuels, or of a certain steam capacity, use of the EHE 5 is advantageous. Typically, the EHE 5 is deployed as a bubbling-bed heat exchanger that includes one or more compartments, each compartment including an array of immersed tubes which are grouped as at least one tube bundle 6.

In typical embodiments, the combustor 2 generally includes two regions. A lower portion and an upper portion. The lower portion of the combustor 2 includes the fuel, a primary air distributor, secondary air ports, fuel feed ports and solid recycle ports. The density of the bed in this region is relatively high on average and typically highest at the elevation of the air distributor. The density then drops off with increasing height of the combustor 2. Physically, the lower portion is usually rectangular, tapered and formed from finned or fusion welded waterwall tubing 15. The lower portion is typically lined with refractory to protect the waterwall tubing 15.

In this simplified illustration, the waterwall tubing 15 is supplied boiler water (water from a drum) by an inlet header 17. The inlet header 17 provides the boiler water for steam generation in the waterwall tubing 15 of the combustor 2.

The upper portion of the combustor 2 includes at least one gas outlet 7 which communicates with the cyclone 3. The upper portion is usually rectangular with vertical walls, where the walls are formed with finned or fusion welded waterwall tubing 15. The upper portion is typically unlined to maximize heat transfer to the waterwall tubing 15.

The walls of the combustor 2 are cooled by thermo-syphonic (natural) circulation. At high steam and water pressures, the walls of the combustor 2 may incorporate assisted circulation.

In the arrangement design of evaporative tubing in a boiler, the heat absorbing surface must be configured as to avoid dry out of the internal surface of the tubing. This is accomplished by preventing steam and water separation. The separation is prevented by having all heated circuits run vertically or sloping upward with rifled tubing, or by being pumped horizontally. Otherwise the tubing will either become overheated due to a lack of coolant, or else it will quickly suffer high internal disposition rates of iron oxide, with the potential for overheating and internal corrosion. Therefore, in evaporative bundle EHE's, either inclined/vertical heat absorbing surface is used, or else pumped horizontal surface.

Still referring to FIG. 1, the prior art CFBSG 10 includes a boiler drum 10 which receives saturated steam and water from the waterwall tubing 15 through various outlet header and riser tubes. The steam drum 8 provides for separation of water (W) and steam (S). In this embodiment, the drum water (W) is also directed to an EHE circulating pump 16 via a downcomer 9. Steam is provided from the EHE 5 via an evaporative tube outlet header (ETOH) 93 to an evaporative bundle riser 95. The steam from the EHE 5 is directed into the steam coming from the combustor 2.

The design presented in FIG. 1, and other similar designs, requires the use of a circulating pump 16, which use electrical energy, in order to provide adequate water flow to the circuits to avoid internal dry out. Also, the EHE circulating pump 16 is an expensive piece of equipment that can require regular maintenance. Further, other components are required, such as the EHE downcomer 9, EHE Evaporator risers, EHE evaporator Inlet and Outlet headers.

To avoid the use of an EHE circulating pump 16, an EHE tube bundle 6 can use natural circulation by inclining the tubes and using rifled tubing. In order to install adequate surface in an external evaporative heat exchanger (such as the EHE 5) while still maintaining natural circulation, a deep bundle is required in order to provide significant upward slope needed to promote the water circulation in each circuit. Upward slope is required to avoid dry out in each tube. The deep bundle requires a deep bed which uses a higher pressure blower (in the case of a external heat exchanger) with a higher power requirement per unit air flow than would be required for a shallower bed, as would be the case with horizontal tubing and pumped (assisted) circulation. The inclined surface also results in less surface area for the tube bundle 6 per unit bed plan area with the consequent requirement of more evaporator assemblies and greater plan area.

Therefore, what is needed are design features for an EHE evaporator that provide for reduced space and bed height or elimination of several components, and elimination of circulation pumps.

From EP 0898 115 A a boiler is known, comprising a circulating fluidized bed combustor, a separator member separating flue gas and solids extracted from the hearth, an external dense fluidized bed between the solids outlet of the separator member and the base of the hearth, the external bed containing a first heat exchanger in which a coolant fluid to be evaporated circulates. The outlet of the first heat exchanger is connected to a second heat exchanger placed on the hearth.

From WO 01/35020 A a boiler is known, a circulating fluidized bed reactor comprising a furnace, defined by a substantially vertical and planar first wall, and a particle separator having a return duct adjacent said first wall. In the lower part of the return duct is arranged a gas seal adjacent a planar tube wall, which wall is said planar wall or a wall defining a space in gas flow connection with the furnace.

### BRIEF SUMMARY OF THE INVENTION

Disclosed is a combustion system having a combustor including tubing to carry boiler water, a cyclone to recover solids from exhaust of the combustor and a heat exchanger to recover heat from the solids according to claim 1.

Also disclosed is a method, defined by independent claim 8, for providing boiler water to a heat exchanger in a combustion system that, inter alia, has a combustor including tubing for carrying boiler water, a cyclone to recover solids from exhaust of the combustor and a heat exchanger to recover heat from the solids, where the method inter alia includes: directing boiler water from the combustor into a bypass and providing the boiler water to tube bundles of the heat exchanger.

In addition, a heat exchanger is described which includes an input adapted for receiving a bypass tube that provides boiler water from waterwall tubing of a combustor and tube bundles for heating the boiler water and returning the boiler water to the combustor via return tubes in continuous circuits.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 depicts aspects of a prior art circulating fluidized bed steam generator;
FIG. 2 depicts aspects of the circulating fluidized bed steam generator system (CFBSGS) according to the teachings herein;
FIG. 3 depicts a side view of an external heat exchanger (EHE);
FIG. 4 depicts a rear view of the EHE;
FIG. 5 depicts a view of a waterwall from inside of a combustor;
FIG. 6 depicts a plan view of the EHE in relation to the combustor;
FIG. 7 depicts tube offset between the EHE and the combustor;
FIG. 8 depicts aspects of the CFBSGS; and
FIG. 9A, and FIG. 9B, collectively referred to as FIG. 9, depict additional embodiments for providing boiler water to the combustor and tube bundles of the EHE.

### DETAILED DESCRIPTION OF THE INVENTION

Disclosed is an improvement to a circulating fluidized bed steam generator (CFBSG) 10. The teachings herein provide for, a simpler external heat exchanger, with less power requirements than a typical external heat exchanger, and a reduced number of components in the circulating fluidized bed steam generator system CFBSGS 100.

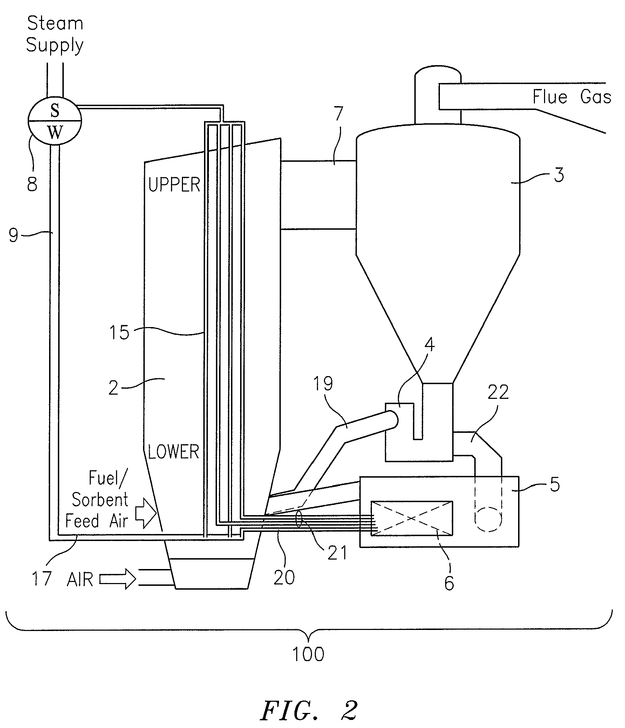

Referring now to FIG. 2, showing aspects of an example of the invention. This depiction is simplified for purposes of illustration. Not all of the components typically associated with a fluidized bed combustor are shown.

In the illustration, a portion of the boiler water for the waterwall tubing 15 is diverted to the EHE 5 and back to the waterwall. As shown in FIG. 2, a fraction of the waterwall tubes are diverted to form tube bundles 6 of the EHE 5. The EHE 5 functions in much the same way as in the prior art (with some differences and advantages including those discussed herein as well as others) to provide for recovery of thermal energy from the combustor solids. Thermal energy recovered by use of the EHE 5 is carried by return flow via return tubes 21 from the EHE 5 to the waterwall tubing 15. The return tubes 21 provide a continuous flow path for the return flow from the tube bundles 6 and back to the remaining waterwall tubing 15. The essential point of the invention is that the vertical flow heat absorption in the combustor ensures adequate flow to avoid dry out or overheating for the part of each tube that is horizontal in the EHE.

As used herein, waterwall tubing 15 is defined as the water cooled tubing forming the containment perimeter of a combustion chamber. The waterwall tubing 15 provides for collection of heat produced in the combustor 2 and generation of the steam.

Alternatively and not forming part of the invention, water may be diverted from the combustor inlet header to separate inlet header for the tube bundle. The selected tubes for the combustor are left out. The tubes of the bundle crossover to the waterwall filling in the missing tubes.

Consequently, at least a portion of the boiler water for the waterwall tubing 15 is used to absorb heat by using the EHE 5. The extent of the portion may be determined according to thermal performance requirements; and may include some, or up to all, of the boiler water. That is, in some configurations, all of the boiler water is directed through the bypass 20. In addition, one skilled in the art will recognize that the bypass 20 may be used in conjunction with prior art designs, such as those using an EHE circulating pump 16 and various downcomers 9 to provide water from the steam drum 8. A variety of advantages are realized by use of the bypass 20 (and the associated components).

As in the prior art, at least one downcomer 9 supplies water to the evaporative cycle from the steam drum 8. As used herein, the term "downcomer" is defined as a pipe carrying boiler water from the steam drum 8 to the inlet of the evaporative surfaces. Flow direction in the downcomer 9 is downward, and there may be distribution devices such as headers, pipes and tubes between the downcomer and the water walls.

Though a circulating pump 16 may be used to circulate water in the evaporative cycle, natural circulation is preferred for simplicity and lower cost. Under "natural circulation" water circulates through the evaporative cycle (e.g., the various water components described herein that are fed by the drum and return the water steam mixture to the drum) unaided by a separate pump that requires power.

As used herein, "natural circulation," also referred to as "thermal circulation" or "thermosyphonic circulation" is the process of circulating boiler water through the closed loop consisting of the steam drum 8, downcomers, waterwall and risers of boiler components. The driving force for the circulation is the difference in hydrostatic head between the downcomer 9 and the heated waterwalls.

Several advantages are realized by integrating the circuit of the EHE with that of the waterwall. One advantage is insuring natural circulation in the EHE even with horizontal heat absorption surface. This reduces the required height of the fluidized bed, which, in turn, reduces the fluidizing air pressure requirements in comparison with sloped evaporation surface. Accordingly, use of primary air, secondary air, and or a source of other lower pressure air, to maintain fluidized bed conditions is possible. The fluidizing air can enter the combustor 2 as secondary air. Thus there is no greater fan power requirement than without an external heat exchanger.

Furthermore, the EHE circuits do not have separate risers or downcomers, since they are part of the waterwall circuits. Thus, the total amount of pressure parts is reduced in comparison to either a typical external heat exchanger or an evaporative panel.

Consider further aspects of the prior art. With an in-combustor surface, such as wingwalls, the extent of evaporative surfaces is fixed. There is little control over temperature in the combustor 2 when process changes occur (such as those that are due to variations in fuel or limestone quality and sizing). Exemplary complications include changes in heat transfer rate, sulphur capture and other such concerns. In short, the amount of fixed surface may be too little or too great to achieve the optimum process temperature for a given condition. In contrast, flow control of solids return from the sealpot 4 through the EHE inlet duct 22 to the EHE 5 by use of control valve permits users to increase or decrease evaporation during operation, and to thus achieve a large measure of control over the combustor bed temperature during operation.

Controlling combustor evaporation and operating temperature may be performed in addition to other techniques for controlling the process, such as reducing bed inventory or changing ratios of primary air to secondary air. The greater complexity of performance and emissions with varying fuel and limestone qualities require ever increasing numbers of independent process control variables, which cannot be addressed by a CFBSGS 100 having a fixed surface.

In the basic embodiment discussed above, a fraction of the waterwall tubes 15 from a section of the combustor 2 are run outside the combustor 2 into a separate EHE, (which could be fluidized or not) where each tube forms a separate element of a heat exchanger tube bundle 6. The enclosed area of the EHE can be either water cooled or refractory lined. Circulating CFB ash is directed to the EHE from the sealpot 4 (also called a siphon seal and a J-leg). An opening in the enclosed area allows the ash to be returned to the combustor 2 either directly, or indirectly through another fluidized area, such as a sealpot 4 or air slide. Each heat absorbing tube 6 of the EHE is run back to the combustor 2 and is used as a waterwall tube 15.

In an alternative configuration not forming part of the invention, also discussed above, the tubes do not originate in the waterwall, but in an external header that is supplied with water from a downcomer 9. Each tube forms a separate element of a heat exchanger tube bundle 6. As in the previous example, each heat absorbing tube of the EHEis run back to the combustor 2 and used as a waterwall tube 15.

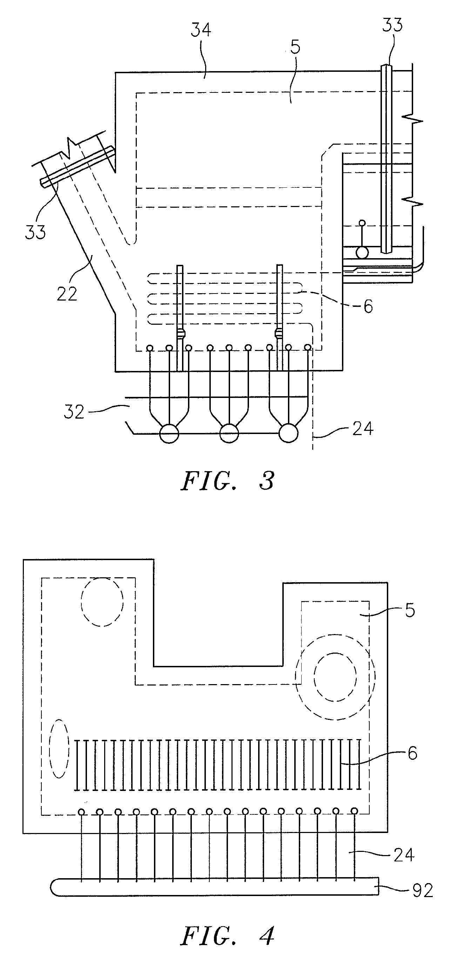

Exemplary diagrams showing further aspects of the CFBSGS 100 are now provided. In FIG. 3, the enclosure of EHE 5 is a refractory lining 34. In other embodiments, the enclosure is formed from waterwall tubes 15 of the combustor 2. Also shown in FIG. 3 are expansion joints 33, the tube bundle 6, an EHE ash inlet duct 22, EHE fluidizing air headers and pipes 32, as well as evaporative bundle inlet tubes 24.

In FIG. 4, a rear view of the EHE 5 is provided. In the rear view, a portion of the inlet header 17 is shown. A number of the evaporative bundle inlet tubes 24 and tubes of the tube bundle 6 are shown. The evaporative bundle inlet tubes 24 are fed by an EHE inlet header 92.

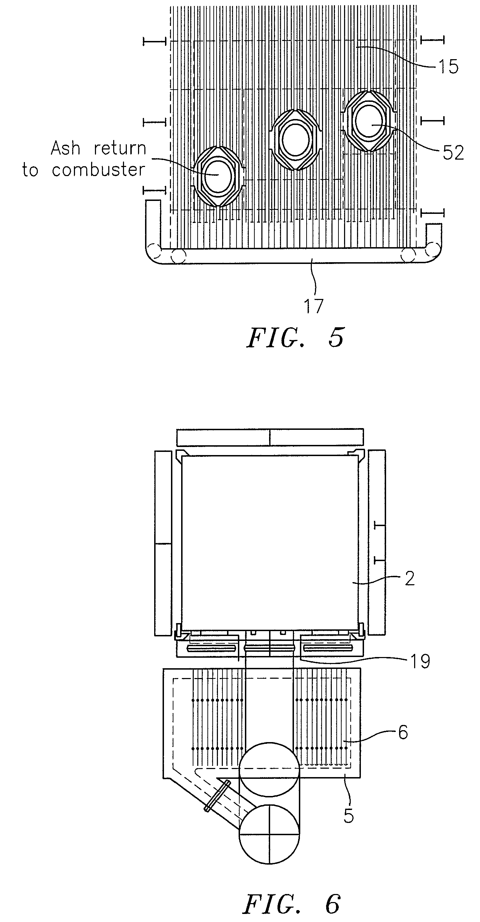

In FIG. 5, a portion of the waterwall which the integrated waterwall external heat exchanger 5 is joined is shown. In this illustration, the penetrations include the ash return 19 and an air vent 52. The air vent 52 is shown in an elevated position.

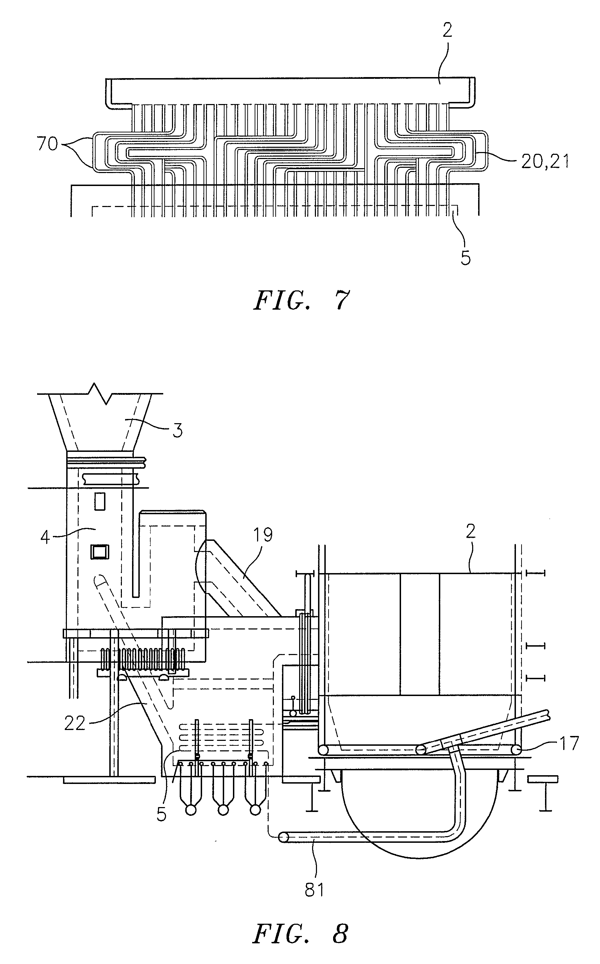

FIG. 6 provides a plan view of the combustor 2 and the EHE 5 in relation to each other. In this illustration, the combustor 2 is rectangular in form. FIG. 7 depicts an embodiment of the bypass 20 in relation to the combustor 2 and the EHE 5. In this example, the tubes between the combustor and external heat exchanger are shown with expansion loops. In another embodiment, the EHE is supported off the combustor and moves up and down with it.

FIG. 8 provides another illustration of relationships presented in FIG. 2. In FIG. 8, a portion of the combustor 2 and a portion of the cyclone 3 are shown. It should be noted that the cyclone 3 and the combustor 2 bear a certain physical relationship to each other such that placement and use of the EHE 5 is most efficient. One skilled in the art will recognize that numerous design parameters play a role in a final design for the CFBSGS 100. Accordingly, it should be understood that the teachings herein are merely illustrative and are not limiting of the invention.

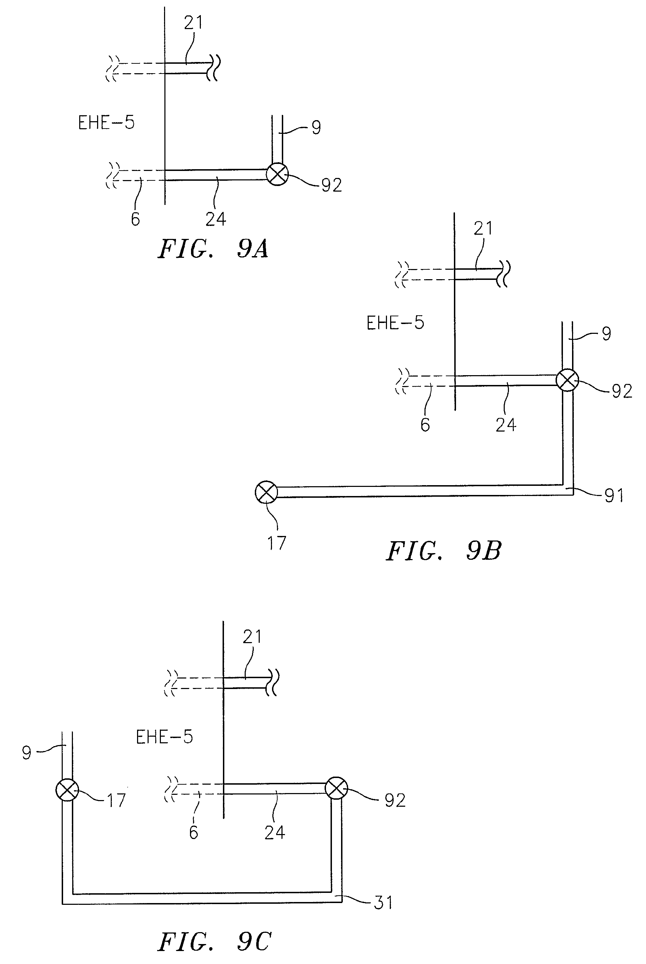

FIG. 9 depicts further configurations not forming part of the invention and embodiments of the invention involving the bypass 20. In these embodiments, at least one downcomer 9 provides boiler water from the steam drum 8. Depicted in FIG. 9 is an EHE inlet header 92 (shown as a supply header in FIG. 2). The EHE inlet header 92 is illustrated for simplicity and to explain the designs provided.

In the example of FIG. 9A, not forming part of the invention, flow from the EHE header 92 and the downcomer 9 passes into the evaporative inlet tubes 24 and then into the tubes of the at least one tube bundle 6. This arrangement provides for separate downcomers 9. In this embodiment, one downcomer 9 (or set thereof) is directed to the EHE 5, and the other downcomer 9 (or set thereof) is directed to the combustor 2. In this design, the EHE 5 and the combustor 2 are in parallel.

In another configuration not forming part of the invention provided in FIG. 9B, a crossover link 91 is included.
The crossover link 91 permits diverting a portion of the flow from the combustor inlet header 17 (show this on Fig. 9B) to the evaporative inlet tubes 24 via the EHE inlet header 92. In this arrangement, the boiler water flows from the downcomer 9 to the EHE inlet header 92 and then to the combustor 2.

A configuration according to an embodiment of the invention is shown in FIG. 9C. In this embodiment, the downcomer 9 is in fluid communication with the combustor inlet header 17 and evaporative supply tubes 31. The evaporative supply tubes 31 take flow to the EHE inlet header 92. In this arrangement, flow from the downcomer 9 goes to the combustor first, then to the EHE 5.

Accordingly, with reference to FIG. 9, one skilled in the art will understand that a variety of configurations may be realized concerning distribution of boiler water flow between the combustor 2 and the EHE 5 as well as mixing flow from various collection points.

In some embodiments, since only a fraction of the waterwall tubes is used for the heat exchanger, the remaining wall tubes can still support the weight of the waterwall if the combustor is bottom supported or the weight of the plenum floor and bed, if the combustor is top supported.

Unique features provided for by the teachings herein include use of an external heat exchanger with horizontal, or substantially horizontal, evaporative surfaces (i.e., tubes) are possible for controlling temperature in the combustor 2, using circulating ash to perform evaporative heat duty without the need for sloping the tubing upward or including forced circulation.

Further advantages of the teachings herein over prior art bubbling external heat exchangers used for controlling bed temperature are that no forced circulation or sloped natural circulation surface is required in order to assure circulation and avoid steam blanketing and overheating of the tubes. The power and equipment expenses of forced circulation are avoided, and large bed volumes required with sloped natural circulation are avoided. Further, the need for separate relief tubes (risers or down comers) for the evaporative bundle are avoided.

As used herein, the terms "water," "feedwater," and "boiler water" make reference to liquid or coolant used for the thermodynamic cycle of the CFBSGS 100. It is recognized that the liquid or coolant is typically water, but that other constituents may be included. For example, the liquid or coolant may include chemicals for limiting erosion and corrosion of various components. It is considered that all of these and other such liquids or coolants fall within the meaning of these foregoing terms.

While the invention has been described with reference to exemplary embodiments, it will be understood by those skilled in the art that various changes may be made and equivalents may be substituted for elements thereof without departing from the scope of the invention as defined by appended claims. In addition, many modifications of the embodiments described will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A combustion system comprising:
a combustor (2) having waterwall tubing (15) to carry boiler water;
a cyclone (3) to recover heated solids from exhaust of the combustor (2); an external heat exchanger (5) to receive the heated solids and to recover heat from the heated solids, the external heat exchanger (5) including a tube bundle (6);
**characterized by**:
a bypass (20) to provide boiler water from the combustor (2) to the tube bundle (6) of the external heat exchanger (5); the bypass (20) comprising a fraction of the waterwall tubing; and
a boiler water return (21) to provide boiler water from the tube bundle (6) to the waterwall tubing (15) of the combustor (2); the boiler water return (21) comprising the remainder of the water wall tubing (15).

2. The system as in claim 1, wherein the bypass (20) comprises at least one of waterwall tubing (15) and an inlet header (17).

3. The system as in claim 1 or 2, wherein the bypass (20) comprises an input for receiving boiler water from a downcomer (9).

4. The system as in one of the foregoing claims, wherein the external heat exchanger (5) is adapted for natural circulation.

5. The system as in one of the foregoing claims, further comprising seal pot (4) and control valve for flow control of solids return which controls heat absorption of an evaporative surface which is external to a combustor (2).

6. The system as in one of the foregoing claims, wherein the tube bundles (6) of the external heat exchanger (5) are at least one of horizontal and substantially horizontal.

7. The system as in one of the foregoing claims, wherein each tube in the tube bundle (6) is coupled to, and in fluid communication with, a waterwall tube (15) of a circulating fluidized bed steam generator (10) to provide the boiler water return.

8. A method for providing boiler water to a heat exchanger (5) in a combustion system, the combustion system comprising:
a combustor (2) having waterwall tubing (15) which carries boiler water;
a cyclone (3) which recovers heated solids from exhaust of the combustor (2); an external heat exchanger (5) which receives the heated solids and recovers heat from the heated solids, the external heat exchanger (5) including a tube bundle (6);
a bypass (20) which provides boiler water from the combustor (2) to the tube bundle (6) of the external heat exchanger (5); the bypass (20) comprising a fraction of the waterwall tubing (15); and
a boiler water return (21) which provides boiler water from the tube bundle (6) to the waterwall tubing (15) of the combustor (2) ; the boiler water return (21) comprising the remainder of the water wall tubing (15), the method comprising:
directing boiler water from the combustor (2) into a bypass (20) ; and
providing the boiler water to tube bundles (6) of the external heat exchanger (5).

9. The method of claim 8, further comprising receiving the boiler water from the tube bundles (6) and directing the boiler water to waterwall tubing (15) of the combustor (2).

10. The method as in claim 8 or 9, wherein providing the boiler water comprises absorbing heat in the boiler water.

11. The method as in one of claims 8 to 10, wherein the directing comprises controlling ash flow over an effective evaporative surface of at least one of the external heat exchanger (5) and the combustor (2).

12. The method as in claim 11, wherein controlling comprises directing combustor solids.

13. The method as in one of the claims 8 to 12, further comprising controlling an air supply to the combustor.

14. The method as in one of the claims 8 to 13, wherein the directing comprises directing the boiler water from a lower portion of the combustor (2).

15. The method as in one of the claims 8 to 14, further comprising circulating solids from the cyclone in the heat exchanger.

## Patentansprüche

1. Verbrennungssystem, umfassend:
einen Verbrenner (2) mit einer Wasserwandrohrleitung (15) zum Befördern von Kesselwasser;
einen Fliehkraftabscheider (3) zum Rückgewinnen von erwärmten Feststoffen aus Abgas des Verbrenners (2);
einen externen Wärmetauscher (5) zum Aufnehmen der erwärmten Feststoffe und Rückgewinnen von Wärme aus den erwärmten Feststoffen, wobei der externe Wärmetauscher (5) ein Rohrbündel (6) aufweist;
**dadurch gekennzeichnet, dass**
eine Umgehungsleitung (20) zur Bereitstellung von Kesselwasser aus dem Verbrenner (2) dem Rohrbündel (6) des externen Wärmetauschers (5); wobei die Umgehungsleitung (20) einen Anteil der Wasserwandrohrleitung umfasst; und
eine Kesselwasserrückführung (21) zur Bereitstellung von Kesselwasser aus dem Rohrbündel (6) der Wasserwandrohrleitung (15) des Verbrenners (2); wobei die Kesselwasserrückführung (21) den Rest der Wasserwandrohrleitung (15) umfasst.

2. System nach Anspruch 1, wobei die Umgehungsleitung (20) mindestens eine Wasserwandrohrleitung (15) und einen Eintrittssammler (17) umfasst.

3. System nach Anspruch 1 oder 2, wobei die Umgehungsleitung (20) einen Einlass zum Aufnehmen von Kesselwasser aus einer Fallleitung (9) umfasst.

4. System nach einem der vorhergehenden Ansprüche, wobei der externe Wärmetauscher (5) für eine natürliche Zirkulation ausgelegt ist.

5. System nach einem der vorhergehenden Ansprüche, ferner umfassend einen Abdichtbehälter (4) und ein Steuerventil für die Durchflusssteuerung der Feststoffrückführung, das die Wärmeabsorption einer Verdampfungsoberfläche steuert, die außerhalb eines Verbrenners (2) liegt.

6. System nach einem der vorhergehenden Ansprüche, wobei die Rohrbündel (6) des externen Wärmetauschers (5) mindestens horizontal und/oder im Wesentlichen horizontal sind.

7. System nach einem der vorhergehenden Ansprüche, wobei jedes Rohr in dem Rohrbündel (6) mit einem Wasserwandrohr (15) eines Dampfgenerators (10) mit zirkulierendem Wirbelbett gekoppelt ist und mit diesem in Fluidaustausch steht, um die Kesselwasserrückführung bereitzustellen.

8. Verfahren zum Bereitstellen von Kesselwasser einem Wärmetauscher (5) in einem Verbrennungssystem, wobei das Verbrennungssystem Folgendes umfasst:
einen Verbrenner (2) mit einer Wasserwandrohrleitung (15), die Kesselwasser befördert;
einen Fliehkraftabscheider (3), der erwärmte Feststoffe aus Abgas des Verbrenners (2) zurückgewinnt;
einen externen Wärmetauscher (5), der die erwärmten Feststoffe aufnimmt und Wärme aus den erwärmten Feststoffen zurückgewinnt, wobei der externe Wärmetauscher (5) ein Rohrbündel (6) umfasst;
eine Umgehungsleitung (20), die Kesselwasser aus dem Verbrenner (2) dem Rohrbündel (6) des externen Wärmetauschers (5) bereitstellt; wobei die Umgehungsleitung (20) einen Anteil der Wasserwandrohrleitung (15) umfasst; und
eine Kesselwasserrückführung (21), die Kesselwasser aus dem Rohrbündel (6) der Wasserwandrohrleitung (15) des Verbrenners (2) bereitstellt; wobei die Kesselwasserrückführung (21) den Rest der Wasserwandrohrleitung (15) umfasst, wobei das Verfahren Folgendes umfasst:
Leiten von Kesselwasser aus dem Verbrenner (2) in eine Umgehungsleitung (20); und
Bereitstellen des Kesselwassers Rohrbündeln (6) des externen Wärmetauschers (5).

9. Verfahren nach Anspruch 8, ferner umfassend das Aufnehmen des Kesselwassers aus den Rohrbündeln (6) und Leiten des Kesselwassers zu der Wasserwandrohrleitung (15) des Verbrenners (2).

10. Verfahren nach Anspruch 8 oder 9, wobei das Bereitstellen des Kesselwassers das Absorbieren von Wärme in dem Kesselwasser umfasst.

11. Verfahren nach einem der Ansprüche 8 bis 10, wobei das Leiten das Steuern eines Aschestroms über eine effektive Verdampfungsoberfläche mindestens eines des externen Wärmetauschers (5) und des Verbrenners (2) umfasst.

12. Verfahren nach Anspruch 11, wobei das Steuern das Leiten von Verbrennerfeststoffen umfasst.

13. Verfahren nach einem der Ansprüche 8 bis 12, ferner umfassend das Steuern einer Luftzufuhr zu dem Verbrenner.

14. Verfahren nach einem der Ansprüche 8 bis 13, wobei das Leiten das Leiten des Kesselwassers aus einem unteren Abschnitt des Verbrenners (2) umfasst.

15. Verfahren nach einem der Ansprüche 8 bis 14, ferner umfassend das Zirkulierenlassen von Feststoffen aus dem Fliehkraftabscheider in dem Wärmetauscher.

## Revendications

1. Système de combustion comprenant :
un four de combustion (2) ayant un tubage de mur d'eau (15) pour transporter de l'eau de chaudière ;
un cyclone (3) pour récupérer les matières solides chauffées de l'échappement du four de combustion (2) ;
un échangeur de chaleur externe (5) pour recevoir les matières solides chauffées et pour récupérer la chaleur des matières solides chauffées, l'échangeur de chaleur externe (5) comportant un faisceau de tubes (6) ; **caractérisé en ce que**
une dérivation (20) pour apporter l'eau de chaudière du four de combustion (2) au faisceau de tubes (6) de l'échangeur de chaleur externe (5) ; la dérivation (20) comprenant une fraction du tubage de mur d'eau ; et
un retour d'eau de chaudière (21) pour apporter l'eau de chaudière du faisceau de tubes (6) au tubage de mur d'eau (15) du four de combustion (2) ; le retour d'eau de chaudière (21) comprenant le reste du tubage de mur d'eau (15).

2. Système selon la revendication 1, dans lequel la dérivation (20) comprend le tubage de mur d'eau (15) et/ou un collecteur d'entrée (17).

3. Système selon la revendication 1 ou 2, dans lequel la dérivation (20) comprend une entrée pour recevoir l'eau de chaudière provenant d'un tuyau de descente (9).

4. Système selon une des revendications précédentes, dans lequel l'échangeur de chaleur externe (5) est adapté pour une circulation naturelle.

5. Système selon une des revendications précédentes, comprenant en outre un pot tampon (4) et une vanne de régulation pour la régulation du débit de retour de matières solides qui contrôle l'absorption de chaleur d'une surface d'évaporation qui est externe à un four de combustion (2).

6. Système selon une des revendications précédentes, dans lequel les faisceaux de tubes (6) de l'échangeur de chaleur externe (5) sont horizontaux et/ou sensiblement horizontaux.

7. Système selon une des revendications précédentes, dans lequel chaque tube dans le faisceau de tubes (6) est couplé à, et en communication fluidique avec, un tube de mur d'eau (15) d'un générateur de vapeur à lit fluidisé circulant (10) pour fournir le retour d'eau de chaudière.

8. Procédé d'apport d'eau de chaudière à un échangeur de chaleur (5) dans un système de combustion, le système de combustion comprenant :
un four de combustion (2) ayant un tubage de mur d'eau (15) qui transporte de l'eau de chaudière ;
un cyclone (3) qui récupère les matières solides chauffées de l'échappement du four de combustion (2) ;
un échangeur de chaleur externe (5) qui reçoit les matières solides chauffées et récupère la chaleur des matières solides chauffées, l'échangeur de chaleur externe (5) comportant un faisceau de tubes (6) ;
une dérivation (20) qui apporte l'eau de chaudière du four de combustion (2) au faisceau de tubes (6) de l'échangeur de chaleur externe (5) ; la dérivation (20) comprenant une fraction du tubage de mur d'eau (15) ; et
un retour d'eau de chaudière (21) qui apporte l'eau de chaudière du faisceau de tubes (6) au tubage de mur d'eau (15) du four de combustion (2) ; le retour d'eau de chaudière (21) comprenant le reste du tubage de mur d'eau (15), le procédé comprenant :
l'acheminement de l'eau de chaudière du four de combustion (2) à une dérivation (20) ; et
l'apport de l'eau de chaudière aux faisceaux de tubes (6) de l'échangeur de chaleur externe (5).

9. Procédé de la revendication 8, comprenant en outre la réception de l'eau de chaudière provenant des faisceaux de tubes (6) et l'acheminement de l'eau de chaudière jusqu'au tubage de mur d'eau (15) du four de combustion (2).

10. Procédé selon la revendication 8 ou 9, dans lequel l'apport de l'eau de chaudière comprend l'absorption de chaleur dans l'eau de chaudière.

11. Procédé selon une des revendications 8 à 10, dans lequel l'acheminement comprend la régulation du débit de cendres sur une surface d'évaporation efficace de l'échangeur de chaleur externe (5) et/ou du four de combustion (2).

12. Procédé selon la revendication 11, dans lequel la régulation comprend l'acheminement des matières solides du four de combustion.

13. Procédé selon une des revendications 8 à 12, comprenant en outre le contrôle d'une alimentation en air du four de combustion.

14. Procédé selon une des revendications 8 à 13, dans lequel l'acheminement comprend l'acheminement de l'eau de chaudière provenant d'une partie inférieure du four de combustion (2).

15. Procédé selon une des revendications 8 à 14, comprenant en outre la circulation des matières solides provenant du cyclone dans l'échangeur de chaleur.
